# NEUE EUROPÄISCHE PATENTSCHRIFT

(11) **EP 0 614 025 B2**
(45) Veröffentlichungstag und Bekanntmachung des Hinweises auf die Entscheidung über den Einspruch: **23.10.2002**
(45) Hinweis auf die Patenterteilung: 10.07.1996
(21) Anmeldenummer: 94103229.4
(22) Anmeldetag: 03.03.1994
(51) Int. Cl.: F16D 65/56

(54) **Nachstellvorrichtung für eine Scheibenbremse**
Adjusting device for a disc brake
Dispositif de rajustage pour un frein à disque

(30) Priorität: 05.03.1993 DE 4307018
(43) Veröffentlichungstag der Anmeldung: 07.09.1994
(73) Patentinhaber: PERROT-BREMSEN GmbH, 68009 Mannheim (DE)
(72) Erfinder: Antony, Paul, D-68642 Bürstadt (DE)
(74) Vertreter: Patentanwälte Leinweber & Zimmermann

(56) Entgegenhaltungen:
- WO-A-91/19115
- DE-A- 4 031 616
- DE-A- 4 032 886
- GB-A- 1 554 709
- GB-A- 2 146 718
- GB-B- 2 035 485
- US-A- 5 000 294
- US-A- 5 123 505

## Beschreibung

Die Erfindung betrifft eine Nachstellvorrichtung für eine Scheibenbremse, insbesondere eine Gleitsattelscheibenbremse, mit mindenstens einer Druckspindel, die an einer Bremsbacke anliegt und in ein durch Drehen einer Zuspannwelle mit Druck in Richtung auf eine Bremsscheibe beaufschlagbares Druckstück eingeschraubt ist, und mit einem Getriebe zwischen der Zuspannwelle und der Druckspindel,
wobei das Getriebe die Druckspindel derart mit der Zuspannwelle koppelt, daß während des Leerhubs der Bremse, d.h. während der Bewegung der Bremsbacke bis zu deren Anlage an der Bremsscheibe eine erste Nachstellbewegung der Druckspindel erfolgt.

Eine Nachstellvorrichtung der eingangs genannten Art ist aus der DE 40 32 886 A1 bekannt. Als weitere Beispiele sind die EP 271 864 B1, die DE 40 31 616 A1 und die WO 91/19115 zu nennen.

Bei den bekannten Nachstellvorrich-tungen besteht das Getriebe aus einer durch die Zuspannwelle angetriebenen einsinnigen Kupplung (z.B. Schlingfeder oder Freilauf), die bei Bremsbetätigung sperrt. Damit überträgt sie ein Drehmoment von der Zuspannwelle auf beispielsweise eine Nachstellwelle. Die Kupplung weist ein federbelastetes Zahn- oder Reibgesperre auf, wodurch die Übertragung des Drehmoments von der Zuspannwelle auf die Nachstellwelle kraft- bzw. momentabhängig ist. Übersteigt das Nachstellmoment infolge Belaganlage beim Bremsvorgang das Grenzmoment der federbelasteten Kupplung, rutscht diese durch und die Nachstellung ist unterbrochen. Mithin erfolgt die Nachstellung immmer nur bei Bremsbetätigung, weshalb zur Lüftspieleinstellung bei einem übermäßigen Belagverschleiß, beispielsweise bei der Bergabfahrt eine Vielzahl von aufeinanderfolgenden Bremsbetätigungen erforderlich ist.

Aus der GB-A-2 146 718 ist eine Bremse bekannt, bei der im Krafthub eine Feder gespannt wird. Die im Lösehub erfolgende Entspannung der Feder führt zu einer Nachstellbewegung. Ein ähnliches Prinzip zeigt die GB-A-1 554 709, jedoch bei einer Trommelbremse. Auch hier wird im Krafthub eine Feder gespannt, deren Entspannung im Lösehub zu einer Nachstellbewegung führt.

Aufgabe der Erfindung ist es die Nachstellvorrichtung der eingangs genannten Art derart weiterzubilden, daß eine Nachstellung nicht nur bei Bremsbetätigung, sondern auch bei Bremsentlastung erfolgt, so daß die Anzahl der Bremsbetätigungen zur Nachstellung verringert ist.

Erfingungsgemäß wird die gestellte Aufgabe dadurch gelöst, daß das Getriebe ein elastisches Element zur Drehkopplung von Zuspannwelle und Druckspindel aufweist, das im Krafthub durch Verformung Energie speichert, die beim Lösen der Bremse in Form einer zweiten Nachstellbewegung wieder abgegeben werden kann.

Damit nutzt die Erfindung die bei Spannung des elastischen Elementes gespeicherte Energie zur Nachstellung bei Bremsentlastung: Kommt beim Bremsen die Bremsbacke zur Anlage an die Bremsscheibe, so steigt die Reibung in der Schraubverbindung zwischen der Druckspindel und dem Druckstück. Wird infolge Belagverschleißes die Zuspannwelle weitergedreht, so verhindert die Gewindereibung ein entsprechendes Weiterdrehen der Druckspindel im Sinne einer Nachstellung. Da aber das elastische Element eine Drehkopplung zwischen Zuspannwelle und Druckspindel darstellt, wird es wegen der Blockierung der Druckspindel einerseits und des Weiterdrehens der Zuspannwelle andererseits gespannt. Bei Entlastung der Bremse sinkt der Bremsdruck und damit die Gewindereibung zwischen Druckspindel und Druckstück. Sobald bei Bremsentlastung die elastische Rückstellkraft des elastischen Elementes die (nachlassende) Gewindereibkraft übersteigt, wird sich das elastische Element entspannen, indem es die Druckspindel im Sinne einer Nachstellung dreht.

Mit anderen Worten wird die beim Bremsen durch Verformung in dem elastischen Element gespeicherte Energie beim Bremslösevorgang zum Nachstellen der Bremse genutzt. Mithin erfolgt eine Nachstellung nicht nur beim Bremsen selbst, sondern auch beim Bremslösevorgang, was die Anzahl der erforderlichen Bremsbetätigungen zur Nachstellung verringert und damit die Nachstellung präziser den Gegebenheiten anpassen läßt.

Erfindungsgemäß kann das elastische Element eine Drehungsfeder sein.

Bevorzugt ist es jedoch, daß das elastische Element eine Schraubenfeder ist.

Weiter bevorzugt ist es erfindungsgemäß, daß die Kopplung der Schraubenfeder mit der Zuspannwelle und/oder der Druckspindel das Lüftspiel der Bremse vorgibt.

Dabei kann die Kopplung eine Stift-Schlitz-Verbindung aufweisen, bei der der Stift mit dem Bremslüftspiel entsprechendem Spiel in den Schlitz eingreift.

Um sicherzustellen, daß die Spieleinstellung auch unter äußeren Einwirkungen wie etwa Vibrationen oder Erschütterungen erhalten bleibt, ist es erfindungsgemäß bevorzugt, daß die Schraubenfeder in Drehrichtung und/oder axial vorgespannt ist.

Besonders bevorzugt ist es, daß das Getriebe an der bremsscheibenabgewandten Seite der Zu spannwelle angeordnet ist. Dadurch wird zum einen erreicht, daß die Nachstellvorrichtung nicht innerhalb der Bremse liegt, was die Montage/Demontage aufwendig machen würde. Darüber hinaus liegt die Nachstellvorrichtung dadurch aber auch nicht im Bereich des Kraftflusses der Zuspannung, wodurch eine hohe Lebensdauer der Einzelteile der Nachstellvorrichtung sowie eine verläßliche Nachstellfunktion gewährleistet sind.

Ferner kann dadurch die gesamte Nachstellvorrichtung (abgesehen von der Druckspindel) vor dem eigentlichen Bremsenzusammenbau komplett an einem Teil des Bremssattels befestigt werden, um einerseits die Nachstellfunktion zu überprüfen und andererseits diesen Sattelteil an dem die Zuspannung aufnehmenden weiteren Sattelgehäuse zu befestigen. Diese Eigenschaft ist gerade beim automatisierten Bremsenzusammenbau wünschenswert.

Zur weiteren Vereinfachung des Einbaus der erfindungsgemäßen Nachstellvorrichtung kann im Falle der Stift-Schlitz-Verbindung der Schlitz nach der bremsscheibenabgewandten Seite der Zuspannwelle hin öffnen. Damit kann die Stift-Schlitz-Verbindung durch einfaches Aufsetzen hergestellt werden.

Nach einer weiter bevorzugten Ausführungsform ist die Drehungsfeder den übrigen Elementen des Getriebes parallel gekoppelt.

Schließlich kann erfindungsgemäß vorgesehen sein, daß mindestens ein Element des Getriebes durch ein axial vorspannendes Federelement in lösbarem Formschluß direkt oder indidrekt mit der Druckspindel gekoppelt ist, wobei die Federkraft des Federelementes größer als die Steifigkeit des elastischen Elementes ist.

Nachstehend ist die Erfindung anhand bevorzugter Ausführungsbeispiele unter Bezugnahme auf die beiliegende Zeichnung mit weiteren Einzelheiten näher erläutert. Dabei zeigen
- Fig. 1: einen Schnitt durch eine Gleitsattelscheibenbremse mit der erfindungsgemäßen Nachstellvorrichtung,
- Fig. 2: einen zu dem Schnitt nach Figur 1 senkrechten Schnitt durch die Gleitsattelscheibenbremse,
- Fig. 3: die erfindungsgemäße Nachstellvorrichtung in vergrößerter Schnittdarstellung,

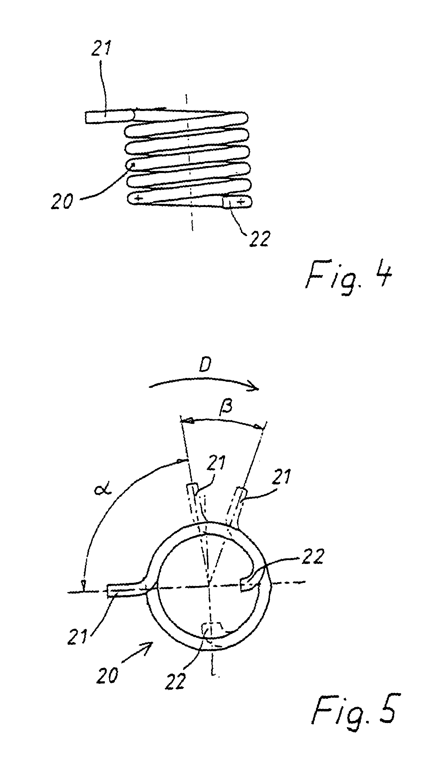

- Fig. 4: eine Seitenansicht der Schraubenfeder aus der Nachstellvorrichtung nach den Figuren 1 bis 3,
- Fig. 5: eine Draufsicht auf die genannte Schraubenfeder und
- Fig. 6: die Schnittansicht nach Figur 1, jedoch zum Zeitpunkt des Zusammensetzens.

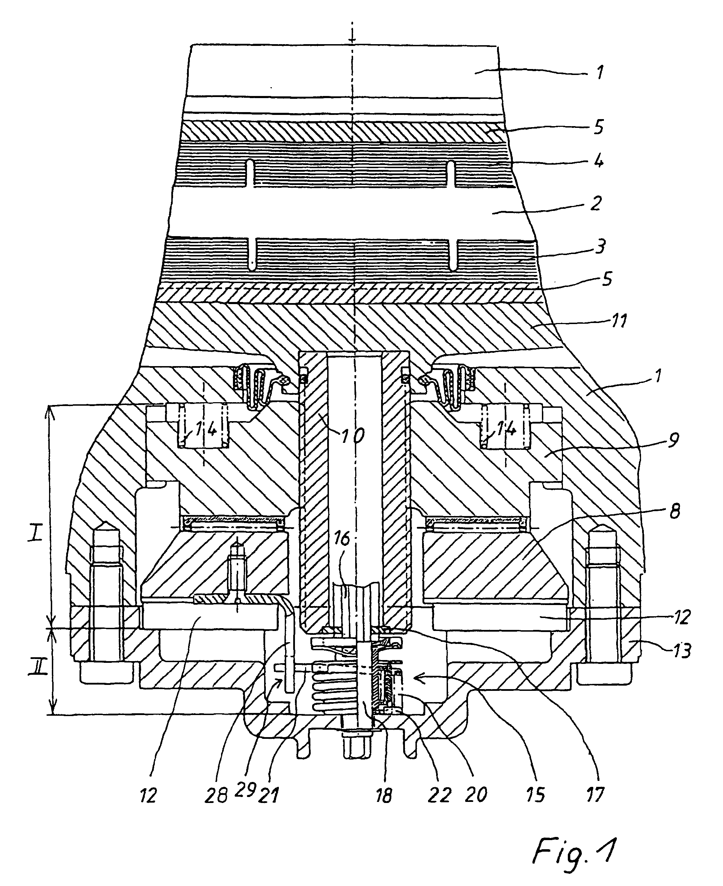

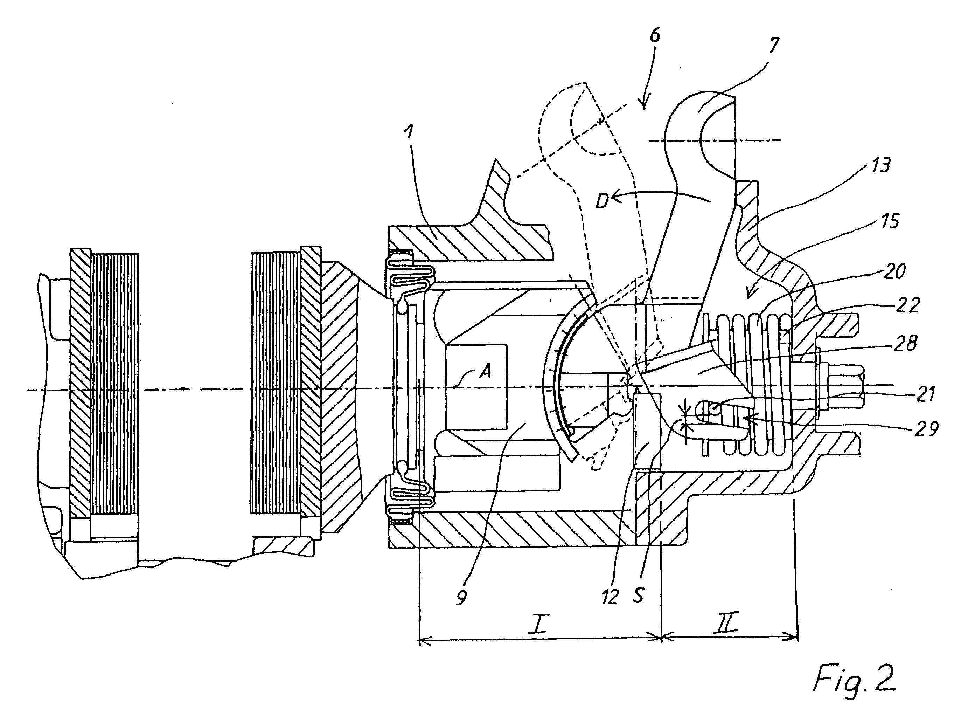

Nach den Figuren 1 und 2 weist die dort dargestellte Scheibenbremse einen Bremssattel 1 auf, der in üblicher Weise mit seinen beiden Schenkeln eine Bremsscheibe 2 übergreift. Beidseits der Bremsscheibe sind Bremsbeläge 3, 4 an Belagträgern 5 in einem nicht dargestellten Bremsenträger bzw. im Bremssattel 1 geführt und abgestützt. Der Bremssattel ist in nicht näher dargestellter Weise mit Hilfe von Führungsmitteln quer zur Bremsscheibe verschieblich gelagert. Der Bremssattel 1 weist einseitig eine Zuspannvorrichtung 6 zur Betätigung der Bremse auf.

Die Zuspannvorrichtung 6 besteht im wesentlichen aus einem Bremshebel 7, der mit einer parallel zur Bremsscheibenebene angeordneten Zuspannwelle 8 verbunden ist, und aus einem im Bremssattel 1 verschieblichen Druckstück 9, in das mittig in der Ebene der Bremsenachse A der Zuspannvorrichtung 6 eine Druckspindel 10 eingeschraubt ist. Zur Bremsscheibe 2 weisend ist die Druckspindel 10 mit einem sich am Belagträger 5 abstützenden Druckteil 11 gekoppelt.

Die Zuspannwelle 8 stützt sich an Stützplatten 12 innerhalb des Bremssattels ab. Der Bremssattel ist durch einen Deckel 13 verschlossen. Die Kontur der Abstützung der Zuspannwelle 8 an den Stützplatten 12 ist Gegenstand einer mit gleichem Zeitrang hinterlegten Patentanmeldung.
Die Zuspannvorrichtung 6 wird durch Druckfedern 14 in Richtung Stützplatten 12 verspannt. Das Druckstück 9 kann im Bremssattel geführt sein.

Durch diese Anordnung ist es möglich, den Innenraum des Bremssattels in zwei Bereiche I und II aufzuteilen. Dabei handelt es sich um einen Zuspannbereich I, der bremsscheibenzugewandt vor den Stützplatten 12 liegt und zur Aufnahme der Betätigung dient, sowie einen Freibereich II, der bremsscheibenabgewandt hinter den Stützplatten 12 liegt und frei von Zuspannkräften ist. Der Freibereich II dient lediglich zur Aufnahme einer Nachstellvorrichtung 15 für die Druckspindel 10.

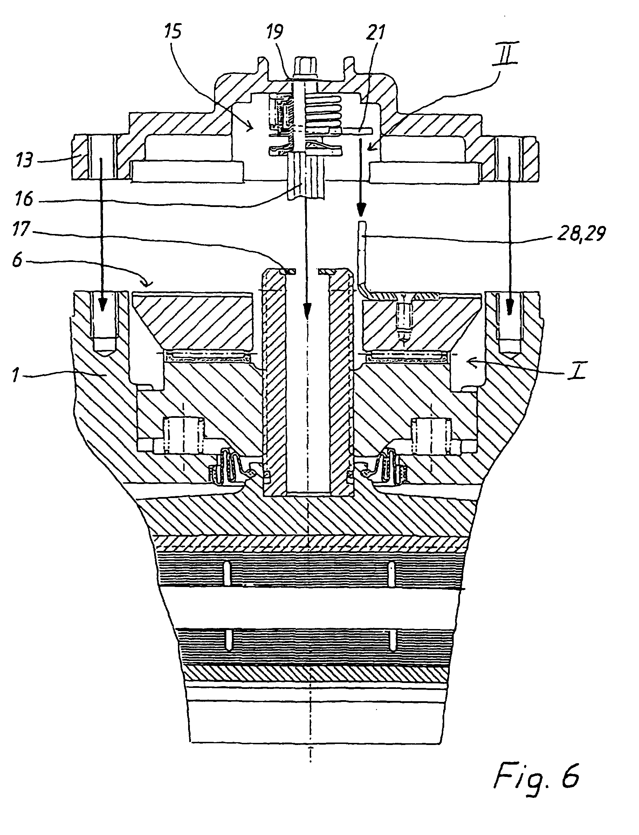

Wie insbesondere Figur 6 zeigt, kann die gesamte Nachstellvorrichtung 15, die anschließend detailliert beschrieben wird, bereits am Deckel 13 im Freibereich II vormontiert sein. Dadurch ist die Nachstellvorrichtung 15 vor dem Einbau auf ihre Funktion überprüfbar. Ferner kann sie komplett mit dem Deckel 13 an dem Bremssattel 1 befestigt werden.

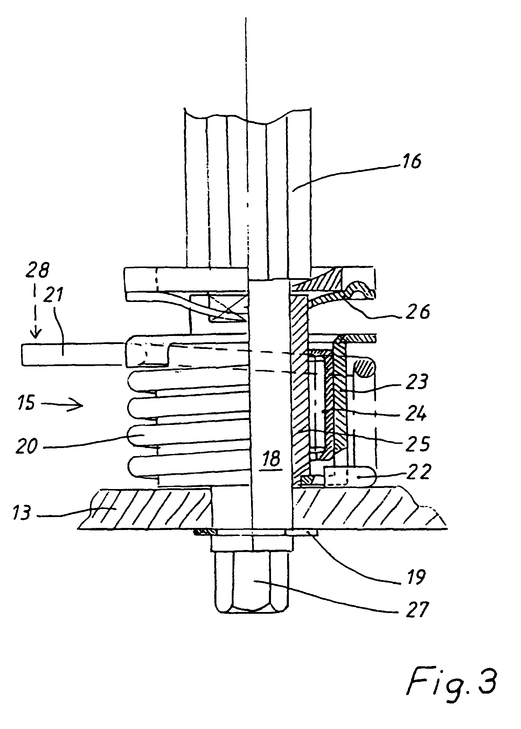

Die Nachstellvorrichtung 15 weist gemäß Figur 3 im einzelnen eine als Profilwelle ausgebildete Nachstellwelle 16 auf, die einerseits mittels Profilscheiben 17 undrehbar, aber axial verschiebbar mit der Druckspindel 10 in Wirkeingriff steht, und andererseits einen zylindrischen Ansatz 18 aufweist. Der Ansatz 18 ist in einer entsprechenden Öffnung des Deckels 13 mittels eines Sicherungsringes 19 o.ä. drehbar gehalten. Innerhalb der Bremse sind auf dem Ansatz 18 in raumsparender Anordnung die weiteren Nachstellteile übereinanderliegend - also "parallelgekoppelt" - angeordnet.

Am radialen Außenumfang des Ansatzes 18 der Nachstellwelle 16 ist eine Drehungsfeder in Form einer Schraubenfeder 20 mittels zweier Federschenkel 21, 22 auf einer ersten Hülse 23 in Drehrichtung vorgespannt gehalten. Zwischen der Schraubenfeder 20 und der ersten Hülse 23 ist ein radiales Spiel vorhanden. Dadurch kann sich die Schraubenfeder 20 je nach Windungsrichtung im Augenblick des Auskuppeins, d. h. wenn sie nicht mehr den Nachstellschritt einleitet, scndern die kraftabhängige Kupplung bildet, entweder zusammendrehen oder aufweiten.

In die erste Hülse 23 ist zur Drehmomentübertragung ein Hülsenfreilauf 24 eingedrückt, wobei dieser auch durch eine Schlingfeder ersetzt werden könnte. Der Freilauf seinerseits sitzt zur Mitnahme für den Nachstellschritt auf einer zweiten Hülse 25, die wiederum auf dem zylindrischen Ansatz 18 der Nachstellwelle 16 gelagert ist. Zwischen der zweiten Hülse 25 und dem Ende des zylindrischen Ansatzes 18 der Nachstellwelle 16 ist formschlüssig ein Federelement 26 zur Drehmomentübertragung auf die Nachstellwelle eingespannt und abgestützt. Durch das Federelement 26 werden auch die anderen Teile der Nachstellvorrichtung 15, insbesondere die zweite Hülse 25, gegen den Deckel 13 vorgespannt und gehalten. Das entsprechende Reibmoment ist beim Bremslösevorgang zum Halten der Nachstellvorrichtung erforderlich. Die axiale Federkraft des Federelementes 26 ist in jedem Fall größer als die Biegesteifigkeit der Schraubenfeder 20, so daß das Federelement 26 nicht etwa die kraftabhängige Kupplung, sondern nur einen lösbaren Federformschluß gegenüber der Nachstellvorrichtung 15 bildet. Dieser ist erforderlich, wenn an einem Schlüsselansatz 27 der Nachstellwelle 16 die Rückstellung der Druckspindel 10 bei einem Belagwechsel erfolgt.

Selbstverständlich kann das Federelement 26 auch andersartig, z. B. durch Tellerfedern, gestaltet und angeordnet sein, wenn es damit die erforderliche Funktion der axialen Vorspannung erfüllt. Ebenso kann der Formschluß zwischen Nachstellwelle 16 und Druckspindel 10 auch andersartig ausgeführt sein.

Die Schraubenfeder 20 ist auf der ersten Hülse 23 gegen den Deckel 13 auch axial vorgespannt, um dadurch im Bremslösezustand ein Haltemoment für ein Lüftspiel S zwischen der ersten Hülse 23 und der zweiten Hülse 25 auszuüben.

Um eine Wirkverbindung zwischen der Zuspannvorrichtung 6 und der Nachstellvorrichtung 15 herzustellen, ist an dem Bremshebel 7 oder der Zuspannwelle 8 ein auskragender Hebel 28 befestigt, der bei Bremsbetätigung mit der Zuspannvorrichtung 6 eine Schwenkbewegung vollzieht. Der Hebel 28 weist zum Deckel 13 zeigend einen offenen Schlitz 29 auf. In diesen Schlitz greift zur Drehmitnahme ein Federschenkel 21 der Schraubenfeder 20 ein. Dabei kann das Lüftspiel der Bremse als Anschlagspiel S zwischen Schlitz und Federschenkel, jedoch auch zwischen anderen Nachstellteilen, festgelegt sein. Insbesondere ist es durch die zum Deckel weisende Schlitzöffnung möglich, den Federschenkel 21 darin einzuschieben und mit dem Hebel 28 zu koppeln, wenn der Deckel 13 mit der Nachstellvorrichtung 15 komplett am Bremssattel 1 befestigt wird (vergleiche Figur 6).

Es sei darauf hingewiesen, daß die Nachstellung mit Schraubenfeder 20 und deren Federschenkel und/oder das Federelement 26 umgekehrt auf dem Ansatz 18 gelagert sein können. Dann ist das Federelement 26 zwischen dem Deckel 13 und der Nachstellvorrichtung 15 vorgespannt.

Selbstverständlich ist die Zuspannvorrichtung und insbesondere die Nachstellvorrichtung auch für eine hydraulische Scheibenbremse mit mechanischer Betätigung als Feststellbremse übertragbar. In diesem Fall wären die Druckspindel 10 als verlängerbares Nachstellteil sowie die Schraubenfeder 20 an einen hydraulischen Bremskolben gekoppelt. Bei einer Axialverschiebung des Kolbens erfolgt dann mittels eines Kopplungsgliedes ein Verdrehen der Nachstellvorrichtung 15 durch die Schraubenfeder 20 in der beschriebenen Weise.

### Funktion:

Bei Betätigung der Zuspannvorrichtung 6 im Sinne des Pfeiles D schwenkt der Hebel 28 mit und greift nach Überwindung des Lüftspiels S hinter den Federschenkel 21. Dabei wird die unter Vorspannung auf der ersten Hülse 23 gehaltene Schraubenfeder 20 mitgedreht. Über deren Biegesteifigkeit und durch den Eingriff des anderen Federschenkels 22 in die erste Hülse 23 erfolgt die Mitnahme der ersten Hülse 23 in der genannten Richtung D. Diese Drehbewegung wird über den in die erste Hülse 23 eingedrückten und in diese Richtung sperrenden Hülsenfreilauf 24 weiter auf die zweite Hülse 25 übertragen. Über das zwischen der zweiten Hülse 25 und der Nachstellwelle 16 formschlüssig gelagerte Federelement 26 erfolgt eine sofortige entsprechende Drehung der Nachstellwelle 16, die mittels ihres Formschlusses mit einer an der Druckspindel 10 befestigten Profilscheibe 17 die Druckspindel 10 im Sinne einer Nachstellung aus dem Druckstück 9 herausschraubt. Diese Nachstellbewegung über die Schraubenfeder 20 bis zur Belaganlage zeigt Figur 5 unter dem Winkel α (Leerhub).

Übersteigt bei der Belaganlage und der einsetzenden elastischen Bremsenverformung unter Fortsetzung der Zuspannbewegung in Richtung D die Gewindereibung zwischen dem Druckstück 9 und der Druckspindel 10 die der Biegesteifigkeit entsprechende Federkraft und somit die Nachstellkraft der Schraubenfeder 20, weitet sich die Schraubenfeder 20 unter dem Winkel β (Krafthub) auf (vergleiche Figur 5). Dadurch überträgt die Schraubenfeder 20 über den sich nicht mehr mitdrehenden Federschenkel 22 keine weitere Drehung auf die angeschlossenen Nachstellteile, so daß der Nachstellvorgang kraftabhängig ausgekuppelt ist. Mithin bildet die Schraubenfeder 20 durch ihre Verformbarkeit nach Überschreitung ihrer Biegesteifigkeit gleichzeitig auch eine kraftabhängige Kupplung.

Je nach ihrer Windungsrichtung kann sich die Schraubenfeder 20 aufweiten oder zusammendrehen. Daher ist sie mit radialem Spiel auf der ersten Hülse 23 gelagert.

Erfolgt beispielsweise bei einer Dauerbremsung (Bergabfahrt) ein größerer Belagverschleiß unter gleichzeitiger Vergrößerung des Winkels β der Schraubenfeder 20, wird ein solcher Belagverschleiß schon beim unmittelbar darauffolgenden Bremslösevorgang teilweise nachgestellt. Dies erfolgt dadurch, daß sich die gegen ihre Biegefestigkeit verformte Schraubenfeder sehr schnell entspannt und über den mit der Nachstellung gekoppelten Federschenkel 22 in oben beschriebener Weise nachstellt. Mit anderen Worten erfolgt durch die Schraubenfeder 20 eine "Doppelnachstellung"

Beim weiteren Bremslösevorgang öffnet der Hülsenfreilauf 24, so daß alle weiteren Teile der Nachstellvorrichtung 15 außer Eingriff bleiben. Dabei stellt sich dann zwischen dem Hebel 28 und dem Federschenkel 21 das Lüftspiel S ein.

Beim Zurückstellen der Bremse für einen Bremsbelagwechsel wird die Nachstellwelle 16 mittels eines Werkzeugs am Schlüsselansatz 27 verdreht. Dabei wird der federnde Formschluß zwischen dem Federelement 26 und der Nachstellwelle 16 aufgehoben, so daß die Teile der Nachstellvorrichtung 15 von dieser Bewegung abgekuppelt sind.

Die in der vorstehenden Beschreibung, den Ansprüchen sowie der Zeichnung offenbarten Merkmale der Erfindung können sowohl einzeln als auch in beliebigenen Kombinationen für die Verwirklichung der Erfindung in ihren verschiedenen Ausführungsformen wesentlich sein.

### Bezugszeichenliste

- 1.: Bremssattel
- 2.: Bremsscheibe
- 3.: Bremsbelag
- 4.: Bremsbelag
- 5.: Belagträger
- 6.: Zuspannvorrichtung
- 7.: Bremshebel
- 8.: Zuspannwelle
- 9.: Druckstück
- 10.: Druckspindel
- 11.: Druckteil
- 12.: Stützplatte
- 13.: Deckel
- 14.: Druckfeder
- 15.: Nachstellvorrichtung
- 16.: Nachstellwelle
- 17.: Pofilscheibe
- 18.: Ansatz
- 19.: Sicherungsring
- 20.: Schraubenfeder
- 21.: Federschenkel
- 22.: Federschenkel
- 23.: erste Hülse
- 24.: Hülsenfreilauf
- 25.: zweite Hülse
- 26.: Federelement
- 27.: Schlüsselansatz
- 28.: Hebel
- I.: Zuspannbereich
- II.: Freibereich
- A: Bremsenachse
- D: Zuspannrichtung
- S: Lüftspiel
- α: Leerhub
- β: Krafthub

## Patentansprüche

1. Nachstellvorrichtung für eine Scheibenbremse, insbesondere eine Gleitsattelscheibenbremse, mit mindestens einer Druckspindel (10), die an einer Bremsbacke (3) anliegt und in ein durch Drehen einer Zuspannwelle (8) mit Druck in Richtung auf eine Bremsscheibe (2) beaufschlagbares Druckstück (9) eingeschraubt ist, und mit einem Getriebe (15) zwischen der Zuspannwelle (8) und der Druckspindel (10), wobei das Getriebe (15) die Druckspindel (10) derart mit der Zuspannwelle (8) koppelt, daß während des Leerhubs der Bremse, d.h. während der Bewegung der Bremsbacke (3) bis zu deren Anlage an der Bremsscheibe (2) eine erste Nachstellbewegung der Druckspindel (10) erfolgt, **dadurch gekennzeichnet, daß** das Getriebe (15) ein elastisches Element (20) zur Drehkopplung von Zuspannwelle (8) und Druckspindel (10) aufweist, das im Krafthub durch Verformung Energie speichert, die beim Lösen der Bremse in Form einer zweiten Nachstellbewegung wieder abgegeben werden kann.

2. Nachstellvorrichtung nach Anspruch 1, **dadurch gekennzeichnet, daß** das elastische Element (20) eine Drehungsfeder ist.

3. Nachstellvorrichtung nach Anspruch 1 oder 2, **dadurch gekennzeichnet, daß** das elastische Element (20) eine Schraubenfeder ist.

4. Nachstellvorrichtung nach Anspruch 3, **dadurch gekennzeichnet, daß** die Kopplung (21, 29) der Schraubenfeder (20) mit der Zuspannwelle (8) und/oder der Druckspindel (10) das Lüftspiel (S) der Bremse vorgibt.

5. Nachstellvorrichtung nach Anspruch 4, **dadurch gekennzeichnet daß** die Kopplung (21, 29) eine Stift-Schlitz-Verbindung aufweist, bei der der Stift (21) mit dem Bremslüftspiel entsprechendem Spiel (S) in den Schlitz (29) eingreift.

6. Nachstellvorrichtung nach Anspruch 4 oder 5, **dadurch gekennzeichnet, daß** die Schraubenfeder (20) in Drehrichtung und/oder axial vorgespannt ist.

7. Nachstellvorrichtung nach einem der vorangehenden Ansprüche, **dadurch gekennzeichnet, daß** das Getriebe (15) an der bremsscheibenabgewandten Seite der Zuspannwelle (8) angeordnet ist.

8. Nachstellvorrichtung nach einem der Ansprüche 5 bis 7, **dadurch gekennzeichnet, daß** der Schlitz (29) nach der bremsscheibenabgewandten Seite der Zuspannwelle (8) hin öffnet.

9. Nachstellvorrichtung nach einem der Ansprüche 2 bis 8, **dadurch gekennzeichnet, daß** die Drehungsfeder (20) den übrigen Elementen (23,24,25) des Getriebes (15) parallel gekoppelt ist.

10. Nachstellvorrichtung nach einem der vorangehenden An- sprüche, **dadurch gekennzeichnet, daß** mindestens ein Element (25) des Getriebes (15) durch ein axial vorspannendes Feder- element (26) in lösbarem Formschluß direkt oder indirekt mit der Druckspindel (10) gekoppelt ist, wobei die Federkraft des Federelementes (26) größer als die Steifigkeit des elastischen Elementes (20) ist.

## Claims

1. Adjusting device for a disc brake, in particular a floating caliper disc brake, having at least one pressure screw (10), which rests against a brake shoe (3) and is screwed into a thrust pad (9), which through rotation of a brake application shaft (8) may be acted upon by pressure in the direction of a brake disc (2), and having a gearing (15) between the brake application shaft (8) and the pressure screw (10), wherein the gearing (15) couples the pressure screw (10) in such a way to the brake application shaft (8) that during the no-load stroke of the brake, i.e. during the movement of the brake shoe (3) up to its abutment with the brake disc (2), a first adjusting motion of the pressure screw (10) is effected, **characterized in that** the gearing (15) comprises an elastic element (20) for the rotational coupling of brake application shaft (8) and pressure screw (10), which elastic element during the power stroke as a result of deformation stores energy which upon release of the brake may be re-released in the form of a second adjusting motion.

2. Adjusting device according to claim 1, **characterized in that** the elastic element (20) is a torsion spring.

3. Adjusting device according to claim 1 or 2, **characterized in that** the elastic element (20) is a helical spring.

4. Adjusting device according to claim 3, **characterized in that** the coupling (21, 29) of the helical spring (20) to the brake application shaft (8) and/or the pressure screw (10) defines the lifting clearance (S) of the brake.

5. Adjusting device according to claim 4, **characterized in that** the coupling (21, 29) comprises a pin-and-slot connection, in which the pin (21) engages into the slot (29) with the clearance corresponding to the brake lifting clearance (S).

6. Adjusting device according to claim 4 or 5, **characterized in that** the helical spring (20) is preloaded in the direction of rotation and/or axially.

7. Adjusting device according to one of the preceding claims, **characterized in that** the gearing (15) is disposed at the side of the brake application shaft (8) remote from the brake disc.

8. Adjusting device according to one of claims 5 to 7, **characterized in that** the slot (29) opens towards the side of the brake application shaft (8) remote from the brake disc.

9. Adjusting device according to one of claims 2 to 8, **characterized in that** the torsion spring (20) is coupled parallel to the other elements (23, 24, 25) of the gearing (15).

10. Adjusting device according to one of the preceding claims, **characterized in that** at least one element (25) of the gearing (15) is coupled by an axially preloading spring element (26) in a releasable form closure directly or indirectly to the pressure screw (10), the spring force of the spring element (26) being greater than the stiffness of the elastic element (20).

## Revendications

1. Dispositif de rattrapage pour un frein à disque, notamment un frein à disque à étrier coulissant, avec au moins un arbre de poussée (10) qui s'applique à un segment de frein (3) et est vissé dans une pièce de pression (9) pouvant être chargée, par rotation d'un arbre d'application (8) avec pression en direction d'un disque de frein (2), et avec un engrenage (15) entre l'arbre d'application (8) et l'arbre de poussée (10), où l'engrenage (15) couple l'arbre de poussée (10) de telle sorte avec l'arbre d'application (8) que pendant la course à vide du frein, c'est-à-dire pendant le déplacement du segment de frein (3) jusqu'à son application au disque de frein (2), un premier mouvement de rattrapage de l'arbre de poussée (10) a lieu, **caractérisé en ce que** l'engrenage (15) présente un élément élastique (20) pour le couplage tournant de l'arbre d'application (8) et de l'arbre de poussée (10) qui, lors de la course de force stocke, par déformation, de l'énergie qui, lors du relâchement du frein sous la forme d'un deuxième mouvement de rattrapage peut être transmise de nouveau.

2. Dispositif de rattrapage selon la revendication 1, **caractérisé en ce que** l'élément élastique (20) est un ressort de torsion.

3. Dispositif de rattrapage selon la revendication 1 ou 2, **caractérisé en ce que** l'élément élastique (20) est un ressort cylindrique.

4. Dispositif de rattrapage selon la revendication 3, **caractérisé en ce que** le couplage (21, 29) du ressort cylindrique (20) avec l'arbre d'application (8) et/ou l'arbre de poussée (10) prédéfinit le jeu fonctionnel (S) du frein.

5. Dispositif de rattrapage selon la revendication 4, **caractérisé en ce que** le couplage (21, 29) présente un assemblage à broche et à fente où la broche (21) s'engage avec le jeu (S) correspondant au jeu fonctionnel de frein dans la fente (29).

6. Dispositif de rattrapage selon la revendication 4 ou 5, **caractérisé en ce que** le ressort cylindrique (20) est précontraint dans la direction de rotation et/ou axialement.

7. Dispositif de rattrapage selon l'une des revendications précédentes, **caractérisé en ce que** l'engrenage (15) est disposé au côté de l'arbre d'application (8) éloigné du disque de frein.

8. Dispositif de rattrapage selon l'une des revendications 5 à 7, **caractérisé en ce que** la fente (29) s'ouvre vers le côté de l'arbre d'application (8) éloigné du disque de frein.

9. Dispositif de rattrapage selon l'une des revendications 2 à 8, **caractérisé en ce que** le ressort de torsion (20) est couplé parallèlement aux éléments restants (23, 24, 25) de l'engrenage (15).

10. Dispositif de rattrapage selon l'une des revendications précédentes, **caractérisé en ce qu'**au moins un élément (25) de l'engrenage (15) est couplé par un élément de ressort (25) précontraignant axialement par concordance des formes relâchable directement ou indirectement à l'arbre de poussée (10), où la force de ressort de l'élément de ressort (26) est plus grande que la rigidité de l'élément élastique (20).
